Europäisches Patentamt

(19) European Patent Office

Office européen des brevets

(11) Publication number: **0 113 082**
**A2**

# (12) EUROPEAN PATENT APPLICATION

(21) Application number: **83112540.6**

(22) Date of filing: **13.12.83**

(51) Int. Cl.³: **H 04 B 9/00**
**H 04 L 25/30**

(30) Priority: **24.12.82 JP 226367/82**

(43) Date of publication of application:
**11.07.84 Bulletin 84/28**

(84) Designated Contracting States:
**DE FR GB NL**

(71) Applicant: **FUJI ELECTRIC CO. LTD.**
**1-1, Tanabeshinden, Kawasaki-ku**
**Kawasaki 210(JP)**

(72) Inventor: **Eiichi, Nabeta**
**Matsuba Coopo-205 35-9 Honcho 5-chome**
**Koganei-city Tokyo(JP)**

(74) Representative: **Mehl, Ernst, Dipl.-Ing. et al,**
**Postfach 22 01 76**
**D-8000 München 22(DE)**

(54) Optical signal receiving apparatus.

(57) The invention relates to an optical signal receiving apparatus provided corresponding to each of a plurality of terminal equipments for receiving optical signals from each of said terminal equipments in a time divisional multiplication system by a central unit.

To provide an optical signal receiving apparatus capable of selecting levels rapidly and accurately the apparatus comprises a plurality of comparators ($2_1$ - $2_4$) whose threshold levels ($V_1$ - $V_4$) are different from each other and a data-selector (8) for determining the switching level.

EP 0 113 082 A2

FIG 3

Fuji Electric Co., Ltd.           Our Reference
Kawasaki 210 (Japan)              VPA 82 P 8581 E

**0113082**

## Optical Signal Receiving Apparatus

This invention concerns a receiving apparatus for receiving signals carrying measured values measured by a plurality of sensors and converted into optical signals by way of optical transmission channels such as of optical fibers in a time divisional multiplication manner - by a central unit - and, particularly, it relates to an optical signal receiving apparatus for receiving such signals while determining the optimum signal switching level different from each other on every sensor. Since the levels of signals sent from such sensors are generally different, it is desired to automatically determine the optimum signal switching level on every sensor and select only the desired signal based on the thus determined level.

This invention has been made in view of the foregoings and it is an object thereof to provide an optical signal receiving apparatus capable of selecting levels rapidly and accurately.

As discribed in the claim the feature of the invention resides in that the above-mentioned ATC circuit comprises a plurality of comparators whose threshold levels are different from each other and a data selector for determining the switching level for input signals based on the output from the comparators and such ATC circuit is provided corresponding to each of sensors.

This invention will now be described by way of its preferred embodiment shown in the drawings.

Ag 4 Scl / 30.11.1983

Fig. 1 is a structural view showing a conventional optical signal receiving apparatus,

Fig. 1A is a waveform chart in each of sections for illustrating the operation thereof,

Fig. 2 is a schematic view showing 1 : n optical transmission system,

Fig. 2A is a waveform chart for illustrating the level of transmitted signals,

Fig. 3 is a structural view showing one embodiment of this invention and

Fig. 3A is an explanatory view showing a relation between the input signal level and the comparison levels.

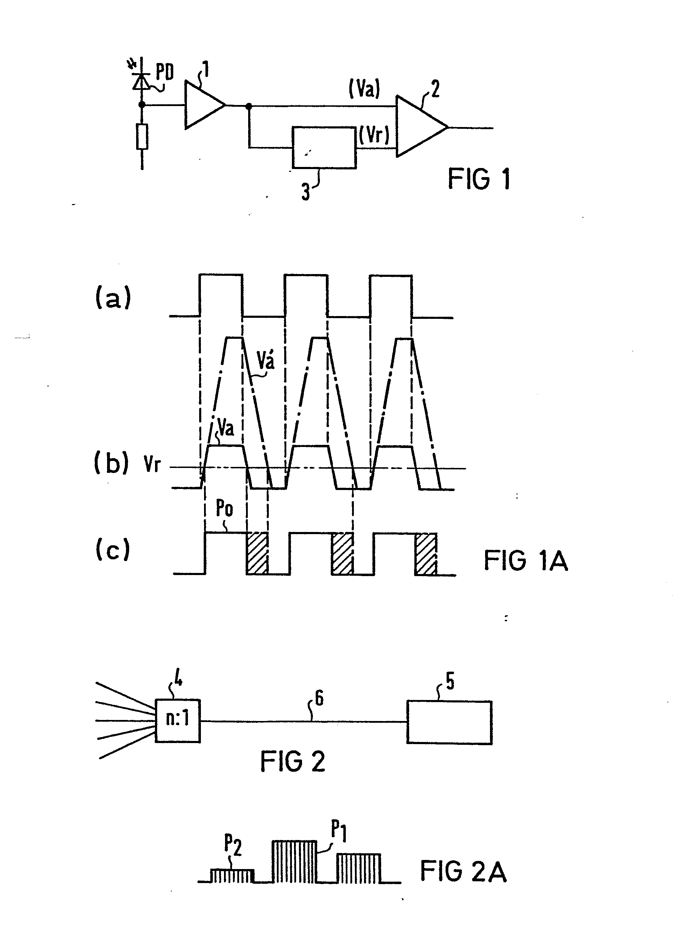

In Fig. 1, are shown an amplifier 1, a comparator 2, an automatic threshold control circuit (ATC) 3 and a photo-receiving device PD such as photodiode.

Specifically, an input signal as shown in Fig. 1A(a) is received by way of the photodiode PD and the amplifier 1 as shown in Fig. 1A(b) and then applied to the comparator 2 and the ATC circuit 3. The ATC circuit 3 is composed, for example, of a rectifying circuit for a peak value detection circuit and, since it outputs a signal Vr at a predetermined level depending on the received signal, a signal Va shown by the solid line in Fig. 1A(b) is compared with the level Vr in the comparator 2 to produce an output pulse Po as shown by the solid line in Fig. 1A(c). If the received signal is changed by some reason or other as shown by the broken line Va´ in Fig. 1A(b), the output from the comparator 2 changes with respect to the width of the output pulse Po, that is, the duty ratio as shown by the hatched line in Fig. 1A(c). Accordingly, it is required to control the comparison level properly depending on the level of the received signal, without which receiving error may be resulted. By the way, since 1 : 1 transmission is generally foreseen, an excessive level can be treated as an error. However, in 1 : n time divisional multiple transmission as shown in Fig. 2, since the levels for the input signals are different from each other (difference of about 10 dB, that ist, about ten times may possibly be resulted between higher and lower levels), common use of the receiving apparatus as shown in Fig. 1 may cause such a disadvantage in a case where a signal $P_1$ at a greater waveform level arrives at first an, thereafter, a signal $P_2$ at a lower waveform level arrives for the second time as shown in Fig. 2A and if the comparison level Vr is aligned with the greater waveform $P_1$, that the waveform $P_2$ for the second time can no more be detected. In Fig. 2, are shown a known star coupler for synthesizing optical signals from n numer of sensors, an optical signal receiving apparatus 5 and a transmission channel 6 such as of optical fibers. It may be considered to provide a receiving apparatus as shown in Fig. 1 corresponding to each of the n number of sensors respectively in the case of carrying out 1 : n optical transmission. However, since the ATC circuit and a peak value detection circuit, it can not provide rapid response and, accordingly, can not cope with the high speed transmission as shown in Fig. 2 (speed of about 100 K bit/S - 10 M bit/S is required).

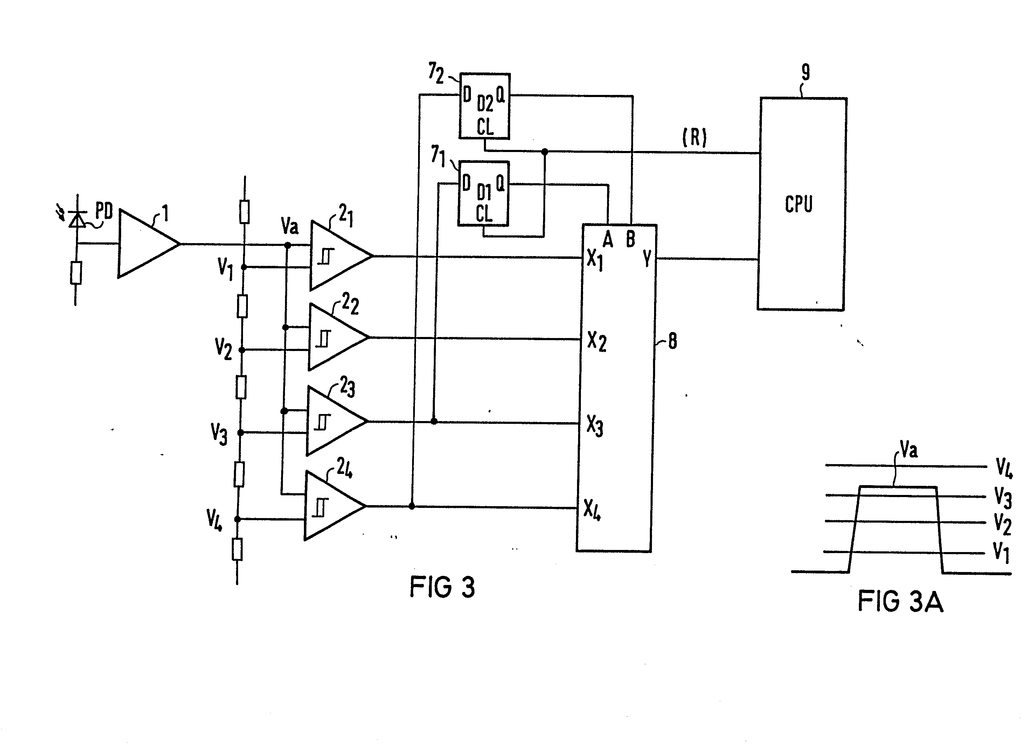

In Fig. 3, are shown flip-flops $7_1$, $7_2$, a data selector 8, a data processing unit (CPU) 9 such as a microcomputer and an amplifier 1, comparators $2_1$ - $2_4$ and a photodiode PD similar to those in Fig. 1. It is assumed here that the threshold levels or the switching levels of the comparators $2_1$ - $2_4$ are set as $V_1$ - $V_4$ and these levels are selected so as to satisfy the relation: $V_1 < V_2 < V_3 < V_4$. While on the other hand, since the received signal Va received by way of the photodiode PD and the amplifier 1 is inputted to each of the comparators $2_1$ - $2_4$, each of the comparators $2_1$ - $2_4$ compares this signal Va with each of the threshold levels $V_1$ - $V_4$ and, if the signal Va exceeds the threshold level, issues a predetermined output. The flip-flops $7_1$, $7_2$ are connected respectively to the output of the comparators $2_3$ and $2_4$ and, accordingly, the flip-flop $7_1$, $7_2$ are set or reset depending on the level of the received signal Va. Consequently, the data selector 8 determins a swithing level or a binary level based on the set or reset pattern of the flip-flop $7_1$ and $7_2$. The level is determined based on the first signal sent from the sensor and the subsequent signals are binarized based on the thus determined signal and read by way of the data selector 8 into the data processing unit 9. When the reading has been completed, the data processing unit 9 sends a reset signal R to the flip-flops $7_1$, $7_2$ returning it to the initial state.

Explanation will be made for the case where the first received signal Va is at a level as shown in Fig. 3A. In this case, since the signal Va satisfies the relation : $V_3 < Va < V_4$, the comparators $2_1$, $2_2$ and $2_3$ issue outputs to set only the flip-flop $7_1$. The logic decision in the data selector in this case is assumed as shown in the following Table.

Table

| case | A | B | Y |
|------|---|---|-----|
| I | 0 | 0 | $X_1$ |
| II | 1 | 0 | $X_2$ |
| III | 1 | 1 | $X_3$ |

Since this case corresponds to the case II, the data selector decides $X_2$, that is, the threshold level of the comparator $2_2$ as the switching level (binary level). In the foregoing table, Y represents the output form the data selector and A and B represent the outputs from the flip-flop $7_1$, $7_2$ respectively.   Although the explanation has been made for the case where the signal Va is between the levels $V_3$ and $V_4$, switching level for other cases can also be determined from the table in the same manner as described before.   In addition, although four comparators are provided in the example of Fig. 3, the number of the comparators may optionally be selected, in which the number of the flip-flops are increased from 2 to 3, 4, .......... in accordance with the number of the comparators in such a relation that the number corresponds to the number of comparators excepting the comparators at least having the minimum threshold level (corresponding to $2_1$ in Fig. 3) and having the threshold level next to the minimum (corresponding to $2_2$ in Fig. 3).

As described above, according to this invention, since the ATC circuit comprises a plurality of comparators, flip-flops and a data selector, it provides a merit that the switching level can be determined rapidly and accurately.

0113082

Claim

An optical signal receiving apparatus provided corresponding to each of a plurality of terminal equipments for receiving optical signals from each of said terminal equipments in a time divisional multiplication system by a central unit, characterized in that
- said optical signal receiving apparatus comprises a plurality of comparators ($2_1$ - $2_4$) having predetermined threshold levels ($V_1$ - $V_4$) different from each other and comparing the levels of the optical signals from said terminal equipments with each of said threshold levels ($V_1$ - $V_4$) respectively,
- a detection circuit ($7_1$, $7_2$) for detecting the output of the comparators ($2_1$ - $2_4$) excepting the comparators at least having the minimum threshold level and the selection circuit (8, 9) for determining said switching level based on the pattern of said detected output.

0113082

FIG 1

(a)

(b) Vr

(c)

FIG 1A

FIG 2

FIG 2A

FIG 3

FIG 3A